(19) Europäisches Patentamt

European Patent Office

Office européen des brevets

(11) EP 2 800 445 B1

(12) **EUROPEAN PATENT SPECIFICATION**

(45) Date of publication and mention
of the grant of the patent:
**21.12.2016 Bulletin 2016/51**

(21) Application number: **14172068.0**

(22) Date of filing: **14.01.2011**

(51) Int Cl.:
***H04W 76/04*** *(2009.01)*

(54) **Method, device, and communication system for controlling dormancy timer**

Verfahren, Vorrichtung und Kommunikationssystem zur Inaktivitäts-Timing-Steuerung

Procédé, dispositif et système de communication pour commande d'horloge de latence

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **14.01.2010 CN 201010002267**

(43) Date of publication of application:
**05.11.2014 Bulletin 2014/45**

(62) Document number(s) of the earlier application(s) in
accordance with Art. 76 EPC:
**11732677.7 / 2 525 620**

(73) Proprietor: **Huawei Technologies Co., Ltd.
Shenzhen, Guangdong 518129 (CN)**

(72) Inventor: **Xi, Le
shenzhen (CN)**

(74) Representative: **Kreuz, Georg Maria
Huawei Technologies Duesseldorf GmbH
Riesstrasse 8
80992 München (DE)**

(56) References cited:
**WO-A1-03/079659      WO-A1-2009/104086
US-A1- 2002 172 178**

• **CHI-CHEN LEE ET AL: "Impact of inactivity timer
on energy consumption in WCDMA and
cdma2000", WIRELESS
TELECOMMUNICATIONS SYMPOSIUM, 2004
POMONA, CA, USA MAY 14-15, 2004,
PISCATAWAY, NJ, USA,IEEE, 1 January 2004
(2004-01-01), pages 15-24, XP031034515, DOI:
10.1109/WTS.2004.1319545 ISBN:
978-0-7803-8246-6**
• **JUI-HUNG YEH ET AL: "Comparative Analysis of
Energy-Saving Techniques in 3GPP and 3GPP2
Systems", IEEE TRANSACTIONS ON
VEHICULAR TECHNOLOGY, IEEE SERVICE
CENTER, PISCATAWAY, NJ, US, vol. 58, no. 1, 1
January 2009 (2009-01-01), pages 432-448,
XP011226380, ISSN: 0018-9545, DOI:
10.1109/TVT.2008.923687**

EP 2 800 445 B1

**Description**

**FIELD OF THE INVENTION**

The present invention relates to the field of communication technologies, and in particular, to a method, a device, and a communication system for controlling a dormancy timer.

**BACKGROUD OF THE INVENTION**

In a communication network system, to prevent a user who has no data to transmit from occupying a resource for a long time, a mechanism of a "dormancy timer" is introduced. By using this mechanism, whenever a user establishes a connection with a network side, the system initiates a timer for the user, and this timer is called the "dormancy timer". When the user has no data transmission, the dormancy timer begins to count time. If the user has no data transmission all the time during the dormancy timer, the system actively releases the connection established by the user and reclaims the occupied resource, thereby improving a cyclic utilization rate of limited resources in the system. If the user begins to transmit data again before the dormancy timer, the dormancy timer is initialized and restarted.

During a process of implementing the present invention, the inventor finds at least the following problems in the prior art.

For a conventional dormancy timer, if a set time threshold is too short, network resources may be saved, but unnecessary removal and establishment of an air interface connection are increased, an extra load of a signaling processing unit of the system may be generated, and a negative effect may be caused on user experience due to the frequent removal and establishment of the connection. If a set time threshold of this timer is too long, limited network resources are occupied by online users for a long time, so that the system cannot reclaim these resources, and new access users cannot be allocated with the resources, which causes that these new users cannot establish connections, thereby reducing a system capacity.

A paper (CHI-CHEN LEE ET AL: "Impact of inactivity timer on energy consumption in WCDMA and cdma2000", WIRELESS TELECOMMUNICATIONS SYMPOSIUM, 2004POMONA, CA, USA MAY 14-15, 2004, PISCATAWAY, NJ, USA, IEEE, 1 January 2004 (2004-01-01), pages 15-24, XP031034515, DOI: 10.1109/WTS.2004.1319545, ISBN: 978-0-7803-8246-6) provides the comparison of the impact of inactivity timer on energy consumption of Mobile Station between WCDMA and cdma2000. Both simulation and analysis are utilized to investigate the impact of inactivity timer and the performance comparison between WCDMA and cdma2000. The novel and practical models proposed in this paper analyze and quantify the energy consumption in the case of bursty and streaming traffic.

Another paper (JUI-HUNG YEH ET AL: "Comparative Analysis of Energy-Saving Technique in 3GPP and 3GPP2 Systems", IEEE TRANSACTIONS ON VEHICULAR TECHNOLOGY, IEEE SERVICE CENTER, PISCATAWAY, NJ, US, vol. 58, no.1, 1 January 2009(2009-01-01), pages 432-448, XP011226380, ISSN:0018-9545, DOI: 10.1109/TVT.2008.923687) presents the details of energy-saving mechanisms for packet data services in two major standards, namely, the Third-Generation Partnership Project (3GPP) and the Third-Generation Partnership Project 2(3GPP2). In addition to qualitative comparison, analytic models and quantitative comparison based on the energy-saving models are provided. The proposed analytic models analyze and quantify the energy consumption for bursty and streaming traffic in cdma2000 and wideband code division multiple access(WCDMA). The impacts of an inactivity timer on energy consumption and reconnection cost are demonstrated further by simulation and analysis. The analytic results could be used to suggest proper timer lengths that can balance the energy consumption and the reconnection cost.

WO03/079659A1 describes methods and systems for determining and maintaining dormancy timer for subscribers in a wireless wide area network that promote efficient use of the radio channels are disclosed. Subscriber usage is monitored to determine subscriber usage statistics. Based on the subscriber statistics, a dormancy timer value is determined for a given subscriber. The dormancy timer for the given subscriber is then set with the dormancy timer value.

**SUMMARY OF THE INVENTION**

To solve a problem that an unnecessary system overhead in a network and a decrease of a system capacity caused by a dormancy timer, the embodiments of the present invention provide a method, a device, and a communication system for controlling a dormancy timer. The technical solutions are as follows.

An embodiment of the present invention provides a method for controlling a dormancy timer, which includes:

obtaining a resource occupation rate of a communication system; and
setting threshold time of the dormancy timer according to the resource occupation rate of the communication system, where the threshold time of the dormancy timer is inversely proportional to the resource occupation rate.

Meanwhile, an embodiment of the present invention further provides a device for controlling a dormancy timer, which includes:

a state monitoring module, configured to monitor a resource occupation rate of a communication system; and
an adjusting module, configured to adjust threshold time of the dormancy timer according to the resource occupation rate of the communication system, where the threshold time of the dormancy timer is inversely proportional to the resource occupation rate.

Meanwhile, an embodiment of the present invention further provides a communication system, which includes a network side and a mobile terminal. The mobile terminal is connected to the network side and performs data transmission. The communication system further includes a dormancy timer set at the network side and/or inside the mobile terminal, and further includes:

a state monitoring module, configured to monitor a resource occupation rate of the communication system; and
an adjusting module, configured to adjust threshold time of the dormancy timer according to the resource occupation rate of the communication system, where the threshold time of the dormancy timer is inversely proportional to the resource occupation rate,
where,
the state monitoring module and the adjusting module are set at the network side;
the state monitoring module is set at the network side, and the adjusting module is set inside the mobile terminal; or
the state monitoring module is set at the network side, and the adjusting module is set inside the network side and the mobile terminal.

A beneficial effect of the technical solutions provided in the embodiments of the present invention is that: In the present invention, the dormancy timer is adjusted dynamically by monitoring the resource occupation rate of the communication system. Threshold time of the dormancy timer is inversely proportional to the resource occupation rate. In this way, dormancy time of the communication system may be adjusted flexibly, so that the communication system may provide better services. Furthermore, the dormancy timer is adjusted according to the resource occupation rate of the communication system, so that an unnecessary system overhead in a network may be prevented, and a decrease of a system capacity may also be prevented.

## BRIEF DESCRIPTION OF THE DRAWINGS

FIG. 1 is a schematic flow chart of a method for controlling a dormancy timer according to a first embodiment of the present invention;
FIG. 2 is a schematic flow chart of a method for controlling a dormancy timer according to a second embodiment of the present invention;
FIG. 3 is a curve diagram of a preset corresponding function between a resource occupation rate of a communication system and threshold time according to an embodiment of the present invention;
FIG. 4 is a curve diagram of a specific example of the corresponding function in FIG. 3;
FIG. 5 is a curve diagram of another specific example of the corresponding function in FIG. 3;
FIG. 6 is a schematic structural diagram of a device for controlling a dormancy timer according to a third embodiment of the present invention;
FIG. 7 is a schematic structural diagram of a device for controlling a dormancy timer according to a fourth embodiment of the present invention; and
FIG. 8 is a schematic structural diagram of a communication system according to a fifth embodiment of the present invention.

## DETAILED DESCRIPTION OF THE EMBODIMENTS

To make the technical solutions, objectives and merits of the present invention clearer, the embodiments of the present invention are described in detail in the following with reference to the accompanying drawings.

### Embodiment 1

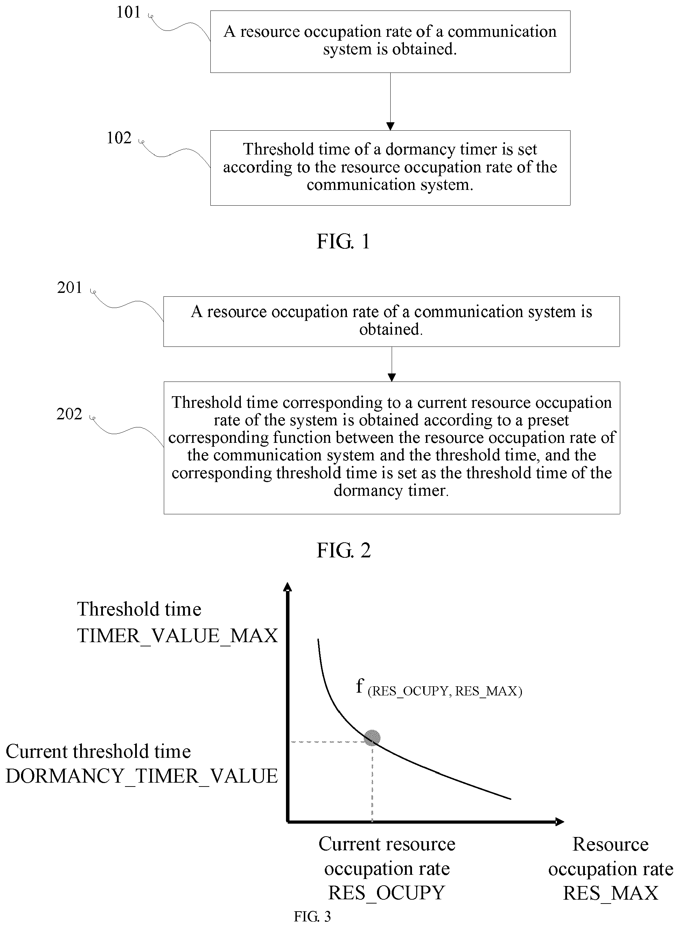

Referring to FIG. 1, a method for controlling a dormancy timer provided in a first embodiment of the present invention includes:

Step 101: A resource occupation rate of a communication system is obtained.

Step 102: Threshold time of the dormancy timer is set according to the resource occupation rate of the communication system, where the threshold time of the dormancy timer is inversely proportional to the resource occupation rate.

The adjustment may be: If the resource occupation rate increases or increases to a preset threshold, the threshold time is decreased; and if the resource occupation rate decreases or decreases to a preset threshold, the threshold time is increased.

In this embodiment of the present invention, by monitoring the resource occupation rate of the communication system, the dormancy timer is adjusted dynamically according to an inversely proportional relation between the resource occupation rate and the dormancy timer,. In this way, dormancy time of the communication system may be adjusted flexibly, so that the communication system may provide better services. Furthermore, the dormancy timer is adjusted according to the resource occupation rate of the communication system, so that an unnecessary system overhead in a network may be prevented, and decrease of a system capacity may also be prevented.

**Embodiment 2**

Referring to FIG. 2, a method for controlling a dormancy timer provided in a second embodiment of the present invention specifically includes:

Step 201: A resource occupation rate of a communication system is obtained.

Step 202: Threshold time corresponding to the current resource occupation rate of the system is obtained according to a preset corresponding function between the resource occupation rate of the communication system and the threshold time, and the corresponding threshold time is set as threshold time of the dormancy timer, where the threshold time of the dormancy timer is inversely proportional to the resource occupation rate.

In this way, the threshold time may be adjusted according to the preset corresponding function, so as to facilitate future maintenance and data updating. Only the corresponding function needs to be adjusted as required during the data updating. Definitely, a corresponding relation between the resource occupation rate of the communication system and the threshold time may also be preset in other manners, for example, in the form of a corresponding relation table. The corresponding function adopted in this embodiment of the present invention is merely taken as an example, and this embodiment of the present invention is not limited herein.

A curve of the corresponding function between the resource occupation rate and the threshold time may be shown in FIG. 3. The corresponding function is specifically expressed as:

DORMANCY_TIMER_VALUE = f (RES_OCUPY, RES MAX),

where DORMANCY_TIMER_VALUE is the threshold time of the dormancy timer, RES_OCUPY is the resource occupation rate of the system, and RES_MAX is a maximum number of system resources.

In the corresponding function, the threshold time is changed with the change of the resource occupation rate. As shown in FIG. 3, a vertical coordinate represents the threshold time TIMER_VALUE_MAX, a horizontal coordinate represents the resource occupation rate, DORMANCY_TIMER_VALUE is a current value of the threshold time, and RES_OCUPY is a current value of the resource occupation rate.

In this way, each value of the threshold time corresponding to each value of the system occupation rate may be obtained according to the function. Through this manner, corresponding threshold time may be calculated rapidly according to the corresponding function, thus saving a system overhead.

The function shown in FIG. 3 may specifically be:

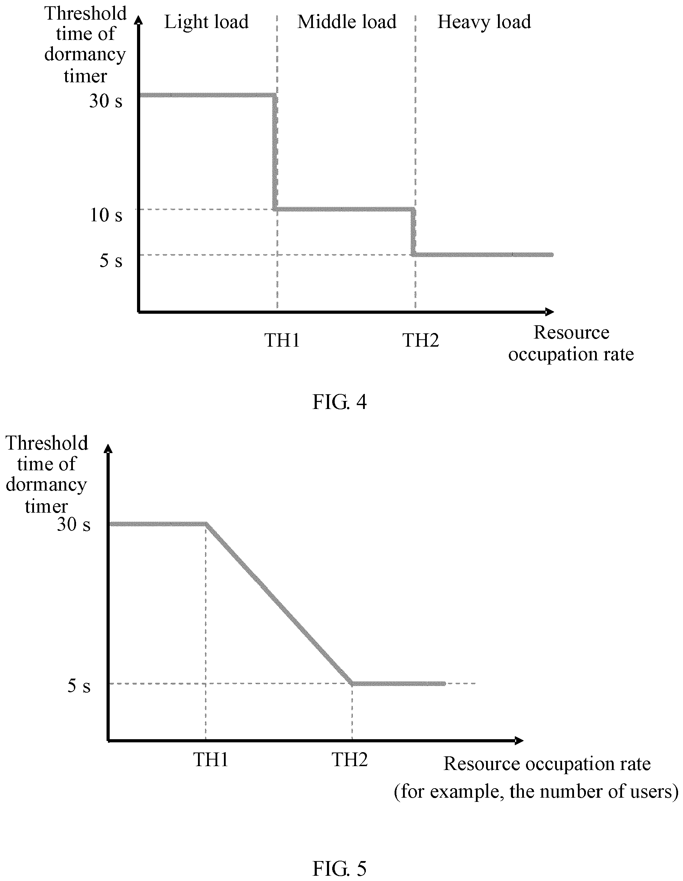

As shown in FIG. 4, the threshold time of the dormancy timer is a constant in each region of the resource occupation rate. Alternatively, as shown in FIG. 5, the threshold time of the dormancy timer is a constant in two end regions of the resource occupation rate, and is a variable in a middle region of the resource occupation rate. The threshold time is decreased as the resource occupation rate increases.

A curve of a function is shown in FIG. 4. The function may be specifically expressed as:

$$DORMANCY\_TIMER\_VALUE = \begin{cases} t1 & RES\_OCUPY < TH1 \\ t2 & TH1 \leq RES\_OCUPY \leq TH2 \\ t3 & TH2 < RES\_OCUPY \end{cases},$$

where TH1 is a first preset threshold of the resource occupation rate, TH2 is a second preset threshold of the resource occupation rate, and TH1 < TH2 < RES_MAX;

t1 is a first preset value of the threshold time, t2 is a second preset value of the threshold time, t3 is a third preset value of the threshold time, and t1 > t2 > t3.

A value range of the resource occupation rate is separated into three segments through the first preset threshold and the second preset threshold. When the resource occupation rate is greater than TH2, which is in a "heavy" interval, the dormancy timers of all users adopt a smaller value t3 (for example, 5 seconds). When TH1 < the resource occupation rate < TH2, that is, the resource occupation rate is in a "middle" interval, the dormancy timers adopt a little greater value t2 (for example, 10 seconds). When the resource occupation rate is smaller than TH1, which is in a "light" interval, the dormancy timers adopt a much greater value t1 (for example, 30 seconds).

By adopting the threshold time in this manner, frequent adjustment to the threshold time may be prevented, thus reducing the system overhead.

A curve of a function is shown in FIG. 5. The function may be specifically expressed as:

$$DORMANCY\_TIMER\_VALUE =$$
$$\begin{cases} t1 & RES\_OCUPY < TH1 \\ RES\_OCUPY/(TH2 - TH1)*t2 - t1 & TH1 \leq RES\_OCUPY \leq TH2 \\ t3 & TH2 < RES\_OCUPY \end{cases},$$

where, in the preceding formula, TH1 is a first preset threshold of the resource occupation rate, TH2 is a second preset threshold of the resource occupation rate, and TH1 < TH2 < RES_MAX;

t1 is a first preset value of the threshold time, t2 is a second preset value of the threshold time, t3 is a third preset value of the threshold time, and t1 > t2 > t3.

A value range of the resource occupation rate is separated into three segments through the first preset threshold and the second preset threshold. When the resource occupation rate is greater than TH2, which is in a "heavy" interval, the dormancy timers of all users adopt a smaller value t3 (for example, 5 seconds). When TH1 < the resource occupation rate < TH2, that is, the resource occupation is in a "middle" interval, the dormancy timers adopt a value that is equal to (RES_OCUPY -TH1)/ (TH2-TH1)*25 + 5. When the resource occupation rate is smaller than TH1, which is in a "light" interval, the dormancy timers adopt a greater value t1 (for example, 30 seconds).

By adopting the threshold time in this manner, the system may be controlled more accurately, so as to achieve a more accurate control effect.

Definitely, the function curves shown in FIG. 4 and FIG. 5 are merely specific implementation manners of the function curve shown in FIG. 3. Which kind of function is adopted may be determined according to specific usage. This embodiment of the present invention is not limited herein.

**Embodiment 3**

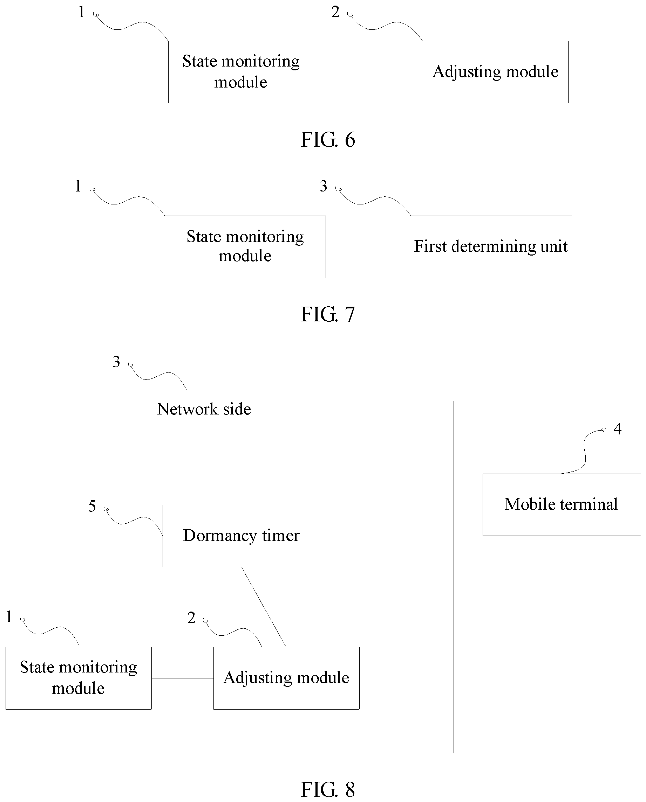

Referring to FIG. 6, a device for controlling a dormancy timer provided in a third embodiment of the present invention includes:

a state monitoring module 1, configured to monitor a resource occupation rate of a communication system; and an adjusting module 2, configured to adjust threshold time of the dormancy timer according to the resource occupation rate of the communication system, where the threshold time of the dormancy timer is inversely proportional to the resource occupation rate.

The adjustment may be: If the resource occupation rate increases or increases to a preset threshold, the threshold time is decreased. If the resource occupation rate decreases or decreases to a preset threshold, the threshold time is increased.

In this embodiment of the present invention, by monitoring the resource occupation rate of the communication system, the dormancy timer is adjusted dynamically according to an inversely proportional relation between the resource occupation rate and the dormancy timer. In this way, dormancy time of the communication system may be adjusted flexibly, so that the communication system may provide better services. Furthermore, the dormancy timer is adjusted according to the resource occupation rate of the communication system, so that an unnecessary system overhead in a network may be prevented, and decrease of a system capacity may also be prevented.

**Embodiment 4**

As shown in FIG. 7, a fourth embodiment of the present invention provides a device for controlling a dormancy timer. That is, the adjusting module 2 in Embodiment 3 may specifically be a first determining unit 3. As shown in FIG. 7, the device includes:

a state monitoring module 1, configured to monitor a resource occupation rate of a communication system.
a first determining unit 3, configured to determine threshold time corresponding to the current resource occupation rate of the system according to a preset corresponding function between the resource occupation rate of the communication system and the threshold time, where the threshold time of the dormancy timer is inversely proportional to the resource occupation rate.

In this way, the threshold time may be adjusted according to the preset corresponding function, so as to facilitate future maintenance and data updating. Only the corresponding function needs to be adjusted as required during the data updating, values of the threshold time may be adjusted at the runtime of the whole system. Definitely, a corresponding relation between the resource occupation rate of the communication system and the threshold time may also be preset in other manners, for example, in the form of a corresponding relation table. The corresponding function adopted in this embodiment of the present invention is merely taken as an example, and this embodiment of the present invention is not limited herein.

A curve of the corresponding function between the resource occupation rate and the threshold time may be shown in FIG. 3. The corresponding function is specifically expressed as:

DORMANCY_TIMER VALUE = f(RES_OCUPY, RES MAX),

where DORMANCY_TIMER_VALUE is the threshold time of the dormancy timer, RES_OCUPY is the resource occupation rate of the system, and RES_MAX is a maximum number of system resources.

In the corresponding function, the threshold time is changed with the change of the resource occupation rate. As shown in FIG. 3, a vertical coordinate represents the threshold time TIMER_VALUE_MAX, a horizontal coordinate represents the resource occupation rate, DORMANCY_TIMER_VALUE is a current value of the threshold time, and RES_OCUPY is a current resource occupation rate.

In this way, each value of the threshold time corresponding to each value of the system occupation rate may be obtained according to the function. Through this manner, corresponding threshold time may be calculated rapidly according to the corresponding function, thus saving a system overhead.

The preceding function may specifically be: As shown in FIG. 4, the threshold time of the dormancy timer is a constant in each region of the resource occupation rate. Alternatively, as shown in FIG. 5, the threshold time of the dormancy timer is a constant in two end regions of the resource occupation rate, and is a variable in a middle region of the resource occupation rate. The threshold time is decreased as the resource occupation rate increases.

A curve of a function is shown in FIG. 4. The function may be specifically expressed as:

$$\mathrm{DORMANCY\_TIMER\_VALUE} = \begin{cases} t1 & \mathrm{RES\_OCUPY} < TH1 \\ t2 & TH1 \le \mathrm{RES\_OCUPY} \le TH2 \\ t3 & TH2 < \mathrm{RES\_OCUPY} \end{cases},$$

where TH1 is a first preset threshold of the resource occupation rate, TH2 is a second preset threshold of the resource occupation rate, and TH1 < TH2 < RES_MAX;
t1 is a first preset value of the threshold time, t2 is a second preset value of the threshold time, t3 is a third preset value of the threshold time, and t1 > t2 > t3.

A value range of the resource occupation rate is separated into three segments through the first preset threshold and the second preset threshold. When the resource occupation rate is greater than TH2, which is in a "heavy" interval, the dormancy timers of all users adopt a smaller value t3 (for example, 5 seconds). When TH1 < the resource occupation rate < TH2, that is, the resource occupation rate is in a "middle" interval, the dormancy timers adopt a little greater value t2 (for example, 10 seconds). When the resource occupation rate is smaller than TH1, which is in a "light" interval, the dormancy timers adopt a much greater value t1 (for example, 30 seconds).

By adopting the threshold time in this manner, frequent adjustment to the threshold time may be prevented, thus reducing the system overhead.

A curve of a function is shown in FIG. 5. The function may be specifically expressed as:

$$
DORMANCY\_TIMER\_VALUE =
\begin{cases}
t1 & RES\_OCUPY < TH1 \\
RES\_OCUPY/(TH2 - TH1) * t2 - t1 & TH1 \le RES\_OCUPY \le TH2 \\
t3 & TH2 < RES\_OCUPY
\end{cases}
\text{,}
$$

where TH1 is a first preset threshold of the resource occupation rate, TH2 is a second preset threshold of the resource occupation rate, and TH1 < TH2 < RES_MAX;

t1 is a first preset value of the threshold time, t2 is a second preset value of the threshold time, t3 is a third preset value of the threshold time, and t1 > t2 > t3.

A value range of the resource occupation rate is separated into three segments through the first preset threshold and the second preset threshold. When the resource occupation rate is greater than TH2, which is in a "heavy" interval, the dormancy timers of all users adopt a smaller value t3 (for example, 5 seconds). When TH1 < the resource occupation rate < TH2, that is, the resource occupation rate is in a "middle" interval, the dormancy timers adopt a value that is equal to (RES_OCUPY -TH1)/ (TH2-TH1)*25 + 5. When the resource occupation rate is smaller than TH1, which is in a "light" interval, the dormancy timers adopt a greater value t1 (for example, 30 seconds).

By adopting the threshold time in this manner, the system may be controlled more accurately, so as to achieve a more accurate control effect.

Definitely, the function curves shown in FIG. 4 and FIG. 5 are merely specific implementation manners of the function curve shown in FIG. 3. Which kind of function is adopted may be determined according to specific usage. This embodiment of the present invention is not limited herein.

**Embodiment 5**

Referring to FIG. 8, a communication system provided in a fifth embodiment of the present invention includes a network side 3 and a mobile terminal 4. The mobile terminal 4 is connected to the network side 3 and performs data transmission. The communication system further includes a dormancy timer 5 set at the network side 3 and/or inside the mobile terminal 4, and further includes:

a state monitoring module 1. configured to monitor a resource occupation rate of the communication system; and
an adjusting module 2, configured to adjust threshold time of the dormancy timer according to the resource occupation rate of the communication system, where the threshold time of the dormancy timer is inversely proportional to the resource occupation rate.

In this embodiment of the present invention, by monitoring the resource occupation rate of the communication system, the dormancy timer is adjusted dynamically according to an inversely proportional relation between the resource occupation rate and the dormancy timer. In this way, dormancy time of the communication system may be adjusted flexibly, so that the communication system may provide better services. Furthermore, the dormancy timer is adjusted according to the resource occupation rate of the communication system, so that an unnecessary system overhead in a network may be prevented, and decrease of a system capacity may also be prevented.

The dormancy timer 5 may be set at the network side 3 and/or inside the mobile terminal 4. The state monitoring module 1 and the adjusting module 2 may be independent of the dormancy timer, or may be set inside the dormancy timer.

For the state monitoring module 1 and the adjusting module 2, reference may be made to Embodiment 3 or Embodiment 4.

For each preceding embodiment, the dormancy timer may be set at the network side and/or a UE side. In this way, when the dormancy timer reaches the threshold time, the network side may be actively disconnected with the UE so as to release occupied resources. The UE may also be actively disconnected with the network side so as to release the occupied resources.

The state monitoring module 1 may be set at the network side. In this way, the network side may monitor the resource occupation rate of the communication system. The adjusting module 2 may be set at the network side and/or the UE side. Either the network side or the UE side may initiate an operation of adjusting the dormancy timer dynamically according to the resource occupation rate of the communication system. Whether the dormancy timer is set at the network side, or at the UE side, or at both the network side and the UE side, the dormancy timer may be adjusted by sending a threshold time reset command through the network. The network side may be a base station. It can be seen that, the device for controlling the dormancy timer provided in this embodiment of the present invention includes the state monitoring module 1 and the adjusting module 2, and the two modules may be set separately. For example, the state monitoring module 1 and the adjusting module 2 are set at the network side; or the state monitoring module 1 is set at the network side, and the adjusting module 2 is set at the UE side; or the state monitoring module 1 is set at the network side, and the adjusting module 2 is set both at the network side and the UE side concurrently.

The resource occupation rate may be determined according to the number of access users of the system. When the number of access users of the system is large, it is considered that the system occupation rate is high. When the number of access users of the system is small, it is considered that the system occupation rate is low. Definitely, the resource occupation rate may be calculated in other manners. This embodiment of the present invention is not limited herein.

It can be seen from the preceding embodiments that, in the embodiments of the present invention, by monitoring the resource occupation rate of the communication system, the dormancy timer is adjusted dynamically. In this way, relatively longer threshold time of the dormancy sever may be set when the system occupation rate is low, so as to improve user experience; and relatively shorter threshold time of the dormancy server may be set when the system occupation rate is low, so as to provide a higher capacity and provide services for more users. A preset corresponding relation may be classified into two types: The threshold time is constant in each interval, or the threshold time is changed with the change of the resource occupation rate in an interval or in all intervals. In the first manner, a frequency of the adjustment on the threshold time of the dormancy timer may be reduced, thus reducing the system overhead. In the second manner, the threshold time may be adjusted more accurately according to the resource occupation rate, so as to achieve accurate control. The present invention is applicable to all systems where dormancy timers are applied.

All or a part of content of the technical solutions provided in the preceding embodiments may be implemented by software programming, and a software program may be stored in readable storage media, such as a hard disk, an optical disk, or a floppy disk in a computer.

The preceding descriptions are merely exemplary embodiments of the present invention, but are not intended to limit the present invention. Any modification, equivalent replacement, or improvement made without departing from the principle of the present invention shall fall within the protection scope of the present invention.

**Claims**

1. A method for controlling a dormancy timer, **characterized by** comprising:

   obtaining (101, 201) a value of a resource occupation rate of a communication system; and
   setting (102, 202) threshold time of the dormancy timer for a mobile terminal according to the value of the resource occupation rate of the communication system,
   wherein if the resource occupation rate increases to a preset threshold, the threshold time is decreased; and if the resource occupation rate decreases to another preset threshold, the threshold time is increased.

2. The method according to claim 1, wherein the setting the threshold time of the dormancy timer for the mobile terminal according to the value of the resource occupation rate of the communication system specifically comprises:

   obtaining a value of the threshold time corresponding to the value of the resource occupation rate of the communication system according to a preset corresponding function between the resource occupation rate of the communication system and the threshold time, and setting the threshold time according to the obtained value of threshold time.

3. The method according to claim 2, wherein the corresponding function between the resource occupation rate of the communication system and the threshold time is:

$$\text{DORMANCY\_TIMER\_VALUE} = \begin{cases} t1 & \text{RES\_OCUPY} < TH1 \\ t2 & \text{TH1} \le \text{RES\_OCUPY} \le \text{TH2} \\ t3 & \text{TH2} < \text{RES\_OCUPY} \end{cases};$$

or

$$\text{DORMANCY\_TIMER\_VALUE} =$$
$$\begin{cases} t1 & \text{RES\_OCUPY} < TH1 \\ \text{RES\_OCUPY}/(\text{TH2} - \text{TH1}) * t2 - t1 & \text{TH1} \le \text{RES\_OCUPY} \le \text{TH2} \\ t3 & \text{TH2} < \text{RES\_OCUPY} \end{cases},$$

wherein,

TH1 is a first preset threshold of the resource occupation rate, TH2 is a second preset threshold of the resource occupation rate, DORMANCY_TIMER_VALUE is the threshold time, RES_OCUPY is the resource occupation rate, RES_MAX is a maximum number of system resources and TH1 < TH2 < RES_MAX; and
t1 is a first preset value of the threshold time, t2 is a second preset value of the threshold time, t3 is a third preset value of the threshold time, and t1 > t2 > t3.

4. The method according to any one of claims 1 to 3, the obtaining the value of the resource occupation rate of the communication system comprises:

obtaining the value of the resource occupation rate according to a number of accessing mobile terminals in the communication system.

5. The method according to any one of claims 1 to 4, wherein the dormancy timer is in the mobile terminal, the dormancy timer starts when the mobile terminal stops transmitting data and the dormancy timer expires when the dormancy timer reaches the threshold time, and the method further comprises:

releasing, by the mobile terminal, a connection between the mobile terminal and a network side equipment, when the dormancy timer in the terminal expires.

6. The method according to any one of claims 1 to 4,
wherein the dormancy timer starts when the mobile terminal stops transmitting data and the dormancy timer expires when the dormancy timer reaches the threshold time; and
when the dormancy timer expires, releasing a connection between the mobile terminal and a network side equipment of the communication system.

7. The method according to any one of claims 1 to 4 and 6, further comprising:

sending to the mobile terminal the obtained current value of the resource occupation rate.

8. A device for controlling a dormancy timer, **characterized by** comprising:

a state monitoring module (1), configured to monitor a resource occupation rate of a communication system; and
an adjusting module (2), configured to adjust threshold time of the dormancy timer for a mobile terminal according to the resource occupation rate of the communication system, wherein if the resource occupation rate increases to a preset threshold, the threshold time is decreased; and if the resource occupation rate decreases to another preset threshold, the threshold time is increased.

9. The device according to claim 8, wherein the adjusting module specifically comprises:

a first determining unit, configured to determine a value of the threshold time corresponding to a current value of the resource occupation rate of the communication system according to a preset corresponding function between the resource occupation rate of the communication system and the threshold time.

10. The device according to claim 9, wherein the corresponding function between the resource occupation rate of the communication system and the threshold time is:

$$DORMANCY\_TIMER\_VALUE = \begin{cases} t1 & RES\_OCUPY < TH1 \\ t2 & TH1 \le RES\_OCUPY \le TH2 \\ t3 & TH2 < RES\_OCUPY \end{cases};$$

or

$$DORMANCY\_TIMER\_VALUE =$$
$$\begin{cases} t1 & RES\_OCUPY < TH1 \\ RES\_OCUPY/(TH2 - TH1)*t2 - t1 & TH1 \le RES\_OCUPY \le TH2 \\ t3 & TH2 < RES\_OCUPY \end{cases},$$

wherein,

TH1 is a first preset threshold of the resource occupation rate, TH2 is a second preset threshold of the resource occupation rate, DORMANCY_TIMER_VALUE is the threshold time, RES_OCUPY is the resource occupation rate, RES_MAX is a maximum number of system resources and TH1 <TH2 < RES_MAX; and
t1 is a first preset value of the threshold time, t2 is a second preset value of the threshold time, t3 is a third preset value of the threshold time, and t1 > t2 > t3.

11. The device according to any one of claims 8 to 10,
wherein the dormancy timer starts when the mobile terminal stops transmitting data and the dormancy timer expires when the dormancy timer reaches the threshold time; and
wherein when the dormancy timer expires, a connection between the mobile terminal and a network side equipment of the communication system is released.

12. A communication system, **characterized by** comprising: a network side equipment and a mobile terminal,
wherein the network side equipment is configured to monitor a resource occupation rate of the communication system; and
the mobile terminal is configured to connect the network side equipment, perform data transmission, and adjust threshold time of a dormancy timer for the mobile terminal according to the resource occupation rate of the communication system, wherein if the resource occupation rate increases to a preset threshold, the threshold time is decreased; and if the resource occupation rate decreases to another preset threshold, the threshold time is increased.

13. The communication system according to claim 12, the mobile terminal is further configured to obtain a value of the threshold time corresponding to a current value of the resource occupation rate of the communication system according to a preset corresponding function between the resource occupation rate of the communication system and the threshold time, and set the threshold time according to the obtained value of threshold time.

14. The communication system according to claim 13, wherein the corresponding function between the resource occupation rate of the communication system and the threshold time is:

$$DORMANCY\_TIMER\_VALUE = \begin{cases} t1 & RES\_OCUPY < TH1 \\ t2 & TH1 \le RES\_OCUPY \le TH2 \\ t3 & TH2 < RES\_OCUPY \end{cases};$$

or

$$DORMANCY\_TIMER\_VALUE = \begin{cases} t1 & RES\_OCUPY < TH1 \\ RES\_OCUPY/(TH2 - TH1) * t2 - t1 & TH1 \le RES\_OCUPY \le TH2 \\ t3 & TH2 < RES\_OCUPY \end{cases},$$

wherein,

TH1 is a first preset threshold of the resource occupation rate, TH2 is a second preset threshold of the resource occupation rate, DORMANCY_TIMER_VALUE is the threshold time, RES_OCUPY is the resource occupation rate, RES_MAX is a maximum number of system resources and TH1 < TH2 < RES_MAX; and
t1 is a first preset value of the threshold time, t2 is a second preset value of the threshold time, t3 is a third preset value of the threshold time, and t1 > t2 > t3.

15. The communication system according to any one of claims 12 to 14, wherein the dormancy timer starts when the mobile terminal stops transmitting data and the dormancy timer expires when the dormancy timer reaches the threshold time; and
wherein when the dormancy timer expires, a connection between the mobile terminal and the network side equipment of the communication system is released.

**Patentansprüche**

1. Verfahren zum Steuern eines Ruhezeitgebers, **dadurch gekennzeichnet, dass** es Folgendes umfasst:

Erhalten (101, 201) eines Werts einer Betriebsmittelbelegungsrate eines Kommunikationssystems; und
Festlegen (102, 202) einer Schwellenzeit des Ruhezeitgebers für ein mobiles Endgerät gemäß dem Wert der Betriebsmittelbelegungsrate des Kommunikationssystems,
wobei, falls sich die Betriebsmittelbelegungsrate auf einen vorgegebenen Schwellenwert erhöht, die Schwellenzeit verringert wird; und falls sich die Betriebsmittelbelegungsrate auf einen anderen vorgegebenen Schwellenwert verringert, die Schwellenzeit erhöht wird.

2. Verfahren nach Anspruch 1, wobei das Festlegen der Schwellenzeit des Ruhezeitgebers für das mobile Endgerät gemäß dem Wert der Betriebsmittelbelegungsrate des Kommunikationssystems insbesondere Folgendes umfasst:

Erhalten eines Werts der Schwellenzeit entsprechend dem Wert der Betriebsmittelbelegungsrate des Kommunikationssystems gemäß einer vorgegebenen Entsprechungsfunktion zwischen der Betriebsmittelbelegungsrate des Kommunikationssystems und der Schwellenzeit, und Festlegen der Schwellenzeit gemäß dem erhaltenen Wert der Schwellenzeit.

3. Verfahren nach Anspruch 2, wobei die Entsprechungsfunktion zwischen der Betriebsmittelbelegungsrate des Kommunikationssystems und der Schwellenzeit Folgende ist:

$$DORMANCY\_TIMER\_VALUE = \begin{cases} t1 & RES\_OCUPY < TH1 \\ t2 & TH1 \le RES\_OCUPY \le TH2 \\ t3 & TH2 < RES\_OCUPY \end{cases}$$

oder

$$DORMANCY\_TIMER\_VALUE =$$
$$\begin{cases} t1 & RES\_OCUPY < TH1 \\ RES\_OCUPY/(TH2-TH1)*t2-t1 & TH1 \leq RES\_OCUPY \leq TH2 \\ t3 & TH2 < RES\_OCUPY \end{cases}$$

wobei

TH1 ein erster vorgegebener Schwellenwert der Betriebsmittelbelegungsrate ist, TH2 ein zweiter vorgegebener Schwellenwert der Betriebsmittelbelegungsrate ist, DORMANCY_TIMER_VALUE die Schwellenzeit ist, RES_OCUPY die Betriebsmittelbelegungsrate ist, RES_MAX eine maximale Anzahl von Systembetriebsmitteln ist, und TH1 < TH2 < RES_MAX; und
t1 ein erster vorgegebener Wert der Schwellenzeit ist, t2 ein zweiter vorgegebener Wert der Schwellenzeit ist, t3 ein dritter vorgegebener Wert der Schwellenzeit ist, und t1 > t2 > t3.

4. Verfahren nach einem der Ansprüche 1 bis 3, wobei das Erhalten des Werts der Betriebsmittelbelegungsrate des Kommunikationssystems Folgendes umfasst:

Erhalten des Werts der Betriebsmittelbelegungsrate gemäß einer Anzahl von zugreifenden mobilen Endgeräten im Kommunikationssystem.

5. Verfahren nach einem der Ansprüche 1 bis 4, wobei sich der Ruhezeitgeber im mobilen Endgerät befindet, der Ruhezeitgeber startet, wenn das mobile Endgerät die Übertragung von Daten stoppt, und der Ruhezeitgeber abläuft, wenn der Ruhezeitgeber die Schwellenzeit erreicht, und das Verfahren ferner Folgendes umfasst:

Freigeben einer Verbindung zwischen dem mobilen Endgerät und einer Netzseitenausrüstung durch das mobile Endgerät, wenn der Ruhezeitgeber im Endgerät abläuft.

6. Verfahren nach einem der Ansprüche 1 bis 4,
wobei der Ruhezeitgeber startet, wenn das mobile Endgerät die Übertragung von Daten stoppt, und der Ruhezeitgeber abläuft, wenn der Ruhezeitgeber die Schwellenzeit erreicht; und
wenn der Ruhezeitgeber abläuft, Freigeben einer Verbindung zwischen dem mobilen Endgerät und einer Netzseitenausrüstung des Kommunikationssystems.

7. Verfahren nach einem der Ansprüche 1 bis 4 und 6, das ferner Folgendes umfasst:

Senden des erhaltenen aktuellen Werts der Betriebsmittelbelegungsrate zum mobilen Endgerät.

8. Vorrichtung zum Steuern eines Ruhezeitgebers, **dadurch gekennzeichnet, dass** sie Folgendes umfasst:

ein Zustandsüberwachungsmodul (1), das dazu konfiguriert ist, eine Betriebsmittelbelegungsrate eines Kommunikationssystems zu überwachen; und
ein Einstellungsmodul (2), das dazu konfiguriert ist, eine Schwellenzeit des Ruhezeitgebers für ein mobiles Endgerät gemäß der Betriebsmittelbelegungsrate des Kommunikationssystems einzustellen, wobei, falls sich die Betriebsmittelbelegungsrate auf einen vorgegebenen Schwellenwert erhöht, die Schwellenzeit verringert wird; und falls sich die Betriebsmittelbelegungsrate auf einen anderen vorgegebenen Schwellenwert verringert, die Schwellenzeit erhöht wird.

9. Vorrichtung nach Anspruch 8, wobei das Einstellungsmodul insbesondere Folgendes umfasst:

eine erste Bestimmungseinheit, die dazu konfiguriert ist, einen Wert der Schwellenzeit entsprechend einem aktuellen Wert der Betriebsmittelbelegungsrate des Kommunikationssystems gemäß einer vorgegebenen Entsprechungsfunktion zwischen der Betriebsmittelbelegungsrate des Kommunikationssystems und der Schwellenzeit zu bestimmen.

10. Vorrichtung nach Anspruch 9, wobei die Entsprechungsfunktion zwischen der Betriebsmittelbelegungsrate des Kommunikationssystems und der Schwellenzeit Folgende ist:

$$DORMANCY\_TIMER\_VALUE = \begin{cases} t1 & RES\_OCUPY < TH1 \\ t2 & TH1 \leq RES\_OCUPY \leq TH2 \\ t3 & TH2 < RES\_OCUPY \end{cases}$$

oder

$$DORMANCY\_TIMER\_VALUE =$$
$$\begin{cases} t1 & RES\_OCUPY < TH1 \\ RES\_OCUPY/(TH2 - TH1)*t2 - t1 & TH1 \leq RES\_OCUPY \leq TH2 \\ t3 & TH2 < RES\_OCUPY \end{cases}$$

wobei

TH1 ein erster vorgegebener Schwellenwert der Betriebsmittelbelegungsrate ist, TH2 ein zweiter vorgegebener Schwellenwert der Betriebsmittelbelegungsrate ist, DORMANCY_TIMER_VALUE die Schwellenzeit ist, RES_OCUPY die Betriebsmittelbelegungsrate ist, RES_MAX eine maximale Anzahl von Systembetriebsmitteln ist, und TH1 < TH2 < RES_MAX; und

t1 ein erster vorgegebener Wert der Schwellenzeit ist, t2 ein zweiter vorgegebener Wert der Schwellenzeit ist, t3 ein dritter vorgegebener Wert der Schwellenzeit ist, und t1 > t2 > t3.

**11.** Vorrichtung nach einem der Ansprüche 8 bis 10,
wobei der Ruhezeitgeber startet, wenn das mobile Endgerät die Übertragung von Daten stoppt, und der Ruhezeitgeber abläuft, wenn der Ruhezeitgeber die Schwellenzeit erreicht; und
wobei, wenn der Ruhezeitgeber abläuft, eine Verbindung zwischen dem mobilen Endgerät und einer Netzseitenausrüstung des Kommunikationssystems freigegeben wird.

**12.** Kommunikationssystem, **dadurch gekennzeichnet, dass** es Folgendes umfasst: eine Netzseitenausrüstung und ein mobiles Endgerät,
wobei die Netzseitenausrüstung dazu konfiguriert ist, eine Betriebsmittelbelegungsrate des Kommunikationssystems zu überwachen; und
das mobile Endgerät dazu konfiguriert ist, die Netzseitenausrüstung zu verbinden, eine Datenübertragung durchzuführen und eine Schwellenzeit eines Ruhezeitgebers für das mobile Endgerät gemäß der Betriebsmittelbelegungsrate des Kommunikationssystems einzustellen, wobei, falls sich die Betriebsmittelbelegungsrate auf einen vorgegebenen Schwellenwert erhöht, die Schwellenzeit verringert wird; und falls sich die Betriebsmittelbelegungsrate auf einen anderen vorgegebenen Schwellenwert verringert, die Schwellenzeit erhöht wird.

**13.** Kommunikationssystem nach Anspruch 12, wobei das mobile Endgerät ferner dazu konfiguriert ist, einen Wert der Schwellenzeit entsprechend einem aktuellen Wert der Betriebsmittelbelegungsrate des Kommunikationssystems gemäß einer vorgegebenen Entsprechungsfunktion zwischen der Betriebsmittelbelegungsrate des Kommunikationssystems und der Schwellenzeit zu erhalten, und die Schwellenzeit gemäß dem erhaltenen Wert der Schwellenzeit festzulegen.

**14.** Kommunikationssystem nach Anspruch 13, wobei die Entsprechungsfunktion zwischen der Betriebsmittelbelegungsrate des Kommunikationssystems und der Schwellenzeit Folgende ist:

$$DORMANCY\_TIMER\_VALUE = \begin{cases} t1 & RES\_OCUPY < TH1 \\ t2 & TH1 \leq RES\_OCUPY \leq TH2 \\ t3 & TH2 < RES\_OCUPY \end{cases}$$

oder

$$\text{DORMANCY\_TIMER\_VALUE} = \begin{cases} t1 & \text{RES\_OCUPY} < TH1 \\ \text{RES\_OCUPY}/(\text{TH2}-\text{TH1})*t2-t1 & \text{TH1} \le \text{RES\_OCUPY} \le \text{TH2} \\ t3 & \text{TH2} < \text{RES\_OCUPY} \end{cases}$$

wobei

TH1 ein erster vorgegebener Schwellenwert der Betriebsmittelbelegungsrate ist, TH2 ein zweiter vorgegebener Schwellenwert der Betriebsmittelbelegungsrate ist, DORMANCY_TIMER VALUE die Schwellenzeit ist, RES_OCUPY die Betriebsmittelbelegungsrate ist, RES_MAX eine maximale Anzahl von Systembetriebsmitteln ist, und TH1 < TH2 < RES_MAX; und
t1 ein erster vorgegebener Wert der Schwellenzeit ist, t2 ein zweiter vorgegebener Wert der Schwellenzeit ist, t3 ein dritter vorgegebener Wert der Schwellenzeit ist, und t1 > t2 > t3.

**15.** Kommunikationssystem nach einem der Ansprüche 12 bis 14, wobei der Ruhezeitgeber startet, wenn das mobile Endgerät die Übertragung von Daten stoppt, und der Ruhezeitgeber abläuft, wenn der Ruhezeitgeber die Schwellenzeit erreicht;
und
wobei, wenn der Ruhezeitgeber abläuft, eine Verbindung zwischen dem mobilen Endgerät und der Netzseitenausrüstung des Kommunikationssystems freigegeben wird.

## Revendications

**1.** Procédé de commande d'un temporisateur d'inactivité, **caractérisé en ce qu'**il comprend :

l'obtention (101, 201) d'une valeur d'un taux d'occupation de ressources d'un système de communication ; et
le réglage (102, 202) d'un temps seuil du temporisateur d'inactivité pour un terminal mobile conformément à la valeur du taux d'occupation de ressources du système de communication,
dans lequel si le taux d'occupation de ressources augmente jusqu'à un seuil préréglé, le temps seuil est diminué ;
et si le taux d'occupation de ressources diminue jusqu'à un autre seuil préréglé, le temps seuil est augmenté.

**2.** Procédé selon la revendication 1, dans lequel le réglage du temps seuil du temporisateur d'inactivité pour le terminal mobile à la valeur du taux d'occupation de ressources du système de communication comprend plus précisément :

l'obtention d'une valeur du temps seuil correspondant à la valeur du taux d'occupation de ressources d'un système de communication conformément à une fonction de correspondance entre le taux d'occupation de ressources du système de communication et le temps seuil ; et le réglage du temps seuil conformément à la valeur obtenue du temps seuil.

**3.** Procédé selon la revendication 2, dans lequel la fonction de correspondance entre le taux d'occupation de ressources du système de communication et le temps seuil est la suivante :

$$\text{VALEUR\_TEMPORISATEUR\_INACTIVITÉ} = \begin{cases} t1 & \text{OCCUPATION\_RES} < TH1 \\ t2 & TH1 \le \text{OCCUPATION\_RES} \le \text{TH2} \\ t3 & \text{TH2} < \text{OCCUPATION\_RES} \end{cases};$$

ou

$$\text{VALEUR\_TEMPORISATEUR\_INACTIVITÉ} =$$

$$\begin{cases} t1 & \text{OCCUPATION\_RES} < TH1 \\ \text{OCCUPATION\_RES} / (TH2 - TH1) + t2 - t1 & TH1 \le \text{OCCUPATION\_RES} \le TH2, \\ t3 & TH2 < \text{OCCUPATION\_RES} \end{cases}$$

où

TH1 est un premier seuil préréglé du taux d'occupation de ressources, TH2 est un deuxième seuil préréglé du taux d'occupation de ressources, VALEUR_TEMPORISATEUR_INACTIVITÉ est le temps seuil, OCCUPATION_RES est le taux d'occupation de ressources, RES_MAX est un nombre maximum de ressources du système et TH1 < TH2 < RES_MAX ; et

t1 est une première valeur préréglée du temps seuil, t2 est une deuxième valeur préréglée du temps seuil, t3 est une troisième valeur préréglée du temps seuil, et t1 > t2 > t3.

4. Procédé selon l'une quelconque des revendications 1 à 3, dans lequel l'obtention de la valeur du taux d'occupation de ressources du système de communication comprend :

l'obtention de la valeur du taux d'occupation de ressources conformément à un nombre de terminaux mobiles en cours d'accès dans le système de communication.

5. Procédé selon l'une quelconque des revendications 1 à 4, dans lequel le temporisateur d'inactivité se trouve dans le terminal mobile et se déclenche lorsque le terminal mobile cesse d'émettre des données, et le temporisateur d'inactivité expire lorsque le temporisateur d'inactivité atteint le temps seuil, le procédé comprenant en outre :

la libération, par le terminal mobile, d'une connexion entre le terminal mobile et un équipement côté réseau, lorsque le temporisateur d'inactivité du terminal expire.

6. Procédé selon l'une quelconque des revendications 1 à 4,
dans lequel le temporisateur d'inactivité se déclenche lorsque le terminal mobile cesse d'émettre des données, et le temporisateur d'inactivité expire lorsque le temporisateur d'inactivité atteint le temps seuil ; et
lorsque le temporisateur d'inactivité expire, une connexion entre le terminal mobile et un équipement côté réseau du système de communication est libérée.

7. Procédé selon l'une quelconque des revendications 1 à 4 et 6, comprenant en outre :

l'envoi au terminal mobile de la valeur courante obtenue du taux d'occupation de ressources.

8. Dispositif de commande d'un temporisateur d'inactivité, **caractérisé en ce qu'**il comprend :

un module de surveillance d'état (1), configuré pour surveiller un taux d'occupation de ressources d'un système de communication ; et
un module d'ajustement (2), configuré pour ajuster le temps seuil du temporisateur d'inactivité pour un terminal mobile conformément au taux d'occupation de ressources du système de communication, dans lequel si le taux d'occupation de ressources augmente jusqu'à un seuil préréglé, le temps seuil est diminué ; et si le taux d'occupation de ressources diminue jusqu'à un autre seuil préréglé, le temps seuil est augmenté.

9. Dispositif selon la revendication 8, dans lequel le module d'ajustement comprend plus précisément :

une première unité de détermination, configurée pour déterminer une valeur du temps seuil correspondant à une valeur courante du taux d'occupation de ressources du système de communication conformément à une fonction de correspondance préréglée entre le taux d'occupation de ressources du système de communication et le temps seuil.

10. Dispositif selon la revendication 9, dans lequel la fonction de correspondance entre le taux d'occupation de ressources du système de communication et le temps seuil est la suivante :

$$\text{VALEUR\_TEMPORISATEUR\_INACTIVITÉ} = \begin{cases} t1 & \text{OCCUPATION\_RES} < TH1 \\ t2 & TH1 \le \text{OCCUPATION\_RES} \le TH2 \\ t3 & TH2 < \text{OCCUPATION\_RES} \end{cases};$$

ou

$$\text{VALEUR\_TEMPORISATEUR\_INACTIVITÉ} = \begin{cases} t1 & \text{OCCUPATION\_RES} < TH1 \\ \text{OCCUPATION\_RES} / (TH2 - TH1) * t2 - t1 & TH1 \le \text{OCCUPATION\_RES} \le TH2 \\ t3 & TH2 < \text{OCCUPATION\_RES} \end{cases}$$

où

TH1 est un premier seuil préréglé du taux d'occupation de ressources, TH2 est un deuxième seuil préréglé du taux d'occupation de ressources, VALEUR_TEMPORISATEUR_INACTIVITÉ est le temps seuil, OCCUPATION_RES est le taux d'occupation de ressources, RES_MAX est un nombre maximum de ressources du système et TH1 < TH2 < RES_MAX ; et

t1 est une première valeur préréglée du temps seuil, t2 est une deuxième valeur préréglée du temps seuil, t3 est une troisième valeur préréglée du temps seuil, et t1 > t2 > t3.

**11.** Dispositif selon l'une quelconque des revendications 8 à 10, dans lequel le temporisateur d'inactivité se déclenche lorsque le terminal mobile cesse d'émettre des données et le temporisateur d'inactivité expire lorsque le temporisateur d'inactivité atteint le temps seuil ; et

dans lequel, lorsque le temporisateur d'inactivité expire, une connexion entre le terminal mobile et un équipement côté réseau du système de communication est libérée.

**12.** Système de communication, **caractérisé en ce qu'**il comprend :

un équipement côté réseau et un terminal mobile,

dans lequel l'équipement côté réseau est configuré pour surveiller un taux d'occupation de ressources du système de communication ; et

le terminal mobile est configuré pour connecter l'équipement côté réseau, effectuer une émission de données et ajuster le temps seuil d'un temporisateur d'inactivité pour le terminal mobile conformément au taux d'occupation de ressources du système de communication, dans lequel si le taux d'occupation de ressources augmente jusqu'à un seuil préréglé, le temps seuil est diminué ; et si le taux d'occupation de ressources diminue jusqu'à un autre seuil préréglé, le temps seuil est augmenté.

**13.** Système de communication selon la revendication 12,

le terminal mobile est en outre configuré pour obtenir une valeur du temps seuil correspondant à une valeur courante du taux d'occupation de ressources du système de communication conformément à une fonction de correspondance préréglée entre le taux d'occupation de ressources du système de communication et le temps seuil, et régler le temps seuil conformément à la valeur obtenue du temps seuil.

**14.** Système de communication selon la revendication 13, dans lequel la fonction de correspondance entre le taux d'occupation de ressources du système de communication et le temps seuil est :

$$\text{VALEUR\_TEMPORISATEUR\_INACTIVITÉ} = \begin{cases} t1 & \text{OCCUPATION\_RES} < TH1 \\ t2 & TH1 \le \text{OCCUPATION\_RES} \le TH2 \\ t3 & TH2 < \text{OCCUPATION\_RES} \end{cases};$$

ou

$$\text{VALEUR\_TEMPORISATEUR\_INACTIVITÉ} = \begin{cases} t1 & \text{OCCUPATION\_RES} < TH1 \\ \text{OCCUPATION\_RES} / (TH2 - TH1) * t2 - t1 & TH1 \leq \text{OCCUPATION\_RES} \leq TH2, \\ t3 & TH2 < \text{OCCUPATION\_RES} \end{cases}$$

où

TH1 est un premier seuil préréglé du taux d'occupation de ressources, TH2 est un deuxième seuil préréglé du taux d'occupation de ressources, V ALEUR_TEMPORISATEUR_INACTIVITÉ est le temps seuil, OCCUPATION_RES est le taux d'occupation de ressources, RES_MAX est un nombre maximum de ressources du système et TH1 < TH2 < RES_MAX ; et

t1 est une première valeur préréglée du temps seuil, t2 est une deuxième valeur préréglée du temps seuil, t3 est une troisième valeur préréglée du temps seuil, et t1 > t2 > t3.

15. Système de communication selon l'une quelconque des revendications 12 à 14, dans lequel le temporisateur d'inactivité se déclenche lorsque le terminal mobile cesse d'émettre des données et le temporisateur d'inactivité expire lorsque le temporisateur d'inactivité atteint le temps seuil ; et

dans lequel, lorsque le temporisateur d'inactivité expire, une connexion entre le terminal mobile et l'équipement côté réseau du système de communication est libérée.

101

A resource occupation rate of a communication system is obtained.

102

Threshold time of a dormancy timer is set according to the resource occupation rate of the communication system.

FIG. 1

201

A resource occupation rate of a communication system is obtained.

202

Threshold time corresponding to a current resource occupation rate of the system is obtained according to a preset corresponding function between the resource occupation rate of the communication system and the threshold time, and the corresponding threshold time is set as the threshold time of the dormancy timer.

FIG. 2

Threshold time
TIMER_VALUE_MAX

$f$ (RES_OCUPY, RES_MAX)

Current threshold time
DORMANCY_TIMER_VALUE

Current resource occupation rate
RES_OCUPY

Resource occupation rate
RES_MAX

FIG. 3

FIG. 4

FIG. 5

1

State monitoring module

2

Adjusting module

FIG. 6

1

State monitoring module

3

First determining unit

FIG. 7

3

Network side

4

Mobile terminal

5

Dormancy timer

1

State monitoring module

2

Adjusting module

FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 03079659 A1

**Non-patent literature cited in the description**

- Impact of inactivity timer on energy consumption in WCDMA and cdma2000. **CHI-CHEN LEE et al.** WIRELESS TELECOMMUNICATIONS SYMPOSIUM, 2004POMONA, CA, USA MAY 14-15, 2004. IEEE, 01 January 2004, 15-24

- Comparative Analysis of Energy-Saving Technique in 3GPP and 3GPP2 Systems. **JUI-HUNG YEH et al.** IEEE TRANSACTIONS ON VEHICULAR TECHNOLOGY. IEEE SERVICE CENTER, 01 January 2009, vol. 58, 432-448